(19) Europäisches Patentamt
European Patent Office
Office européen des brevets

(11) **EP 2 515 233 A1**

(12) **EUROPEAN PATENT APPLICATION**

(43) Date of publication:
**24.10.2012 Bulletin 2012/43**

(51) Int Cl.:
***G06F 11/07*** (2006.01)

(21) Application number: **12163822.5**

(22) Date of filing: **11.04.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **18.04.2011 US 201161476348 P**<br>**03.06.2011 US 201113152335**<br><br>(71) Applicant: **Unisys Corporation**<br>**Blue Bell, PA 19422 (US)** | (72) Inventors:<br>• **Chikkalingaiah, Ramya Malangi**<br>**570023 Mysore, Karnataka (IN)**<br>• **Venkat, Shivaram**<br>**PIN 560025 Bangalore (IN)**<br>• **Salsburg, Michael A.**<br>**Phoenixville, PA 19460 (US)**<br><br>(74) Representative: **Harrison Goddard Foote**<br>**Belgrave Hall**<br>**Belgrave Street**<br>**Leeds**<br>**LS2 8DD (GB)** |

(54) **Detecting and diagnosing misbehaving applications in virtualized computing systems**

(57)     Misbehaving applications may be detected by monitoring system resource utilization in a virtualized computer system. Utilization may be forecasted based on historical utilization data for the system resources when the application is known to be behaving normally. When the monitored utilization of system resources deviates from the forecasted utilization, an alert may be generated. When the alert is generated, system resources allocated to the application may be increased or decreased to prevent abnormal behaviour in the virtualized computer system executing to misbehaving application.

FIG. 1

EP 2 515 233 A1

Description

## CROSS-REFERENCE TO RELATED APPLICATIONS

This application claims priority to U.S. Provisional Application No. 61/476,348 filed on April 18, 2011, to Venkat et al., entitled "Detecting and Diagnosing Application Misbehaviors in 'On-Demand' Virtual Computing Infrastructures."

## TECHNICAL FIELD

The instant disclosure relates to virtualized computer systems. More specifically, the instant disclosure relates to monitoring application performance on virtualized computer systems.

## BACKGROUND

On-demand computing infrastructures such as the Unisys Stealth, the Amazon EC2, and the Microsoft Azure platforms built using x86 virtualization technologies allow applications hosted on these infrastructures to acquire and release computing resources based on conditions within the hosted applications. The allocation of computing resources such as processor, memory, network input/output (I/O), and disk I/O to virtualized applications hosted on such platforms is varied in proportion to the workloads experienced by the applications. For example, certain applications may have higher workload during the day as opposed to at night. These applications may receive increased computing resources during the day and fewer at night. The workloads generally exhibit repetitive behavior, and the resource allocations to the applications change as the workload changes.

Commercial applications are available for monitoring application performance such as Netuitive and AppDynamics. These conventional applications incorporate statistical and machine learning algorithms for forecasting application misbehavior and for determining root-causes of such misbehaviors. These tools are designed for non-virtualized environments and clusters, where applications run on a set of homogenous machines in a dedicated manner.

However, the usefulness of these conventional applications in virtualized data-centers is limited due to the long latency associated with data collection. Conventional monitoring applications spend a significant amount of their time at the beginning of their lifecycle learning application behavior and the learning pattern of resource consumption. Only after sufficient data on various metrics have been collected can these tools differentiate normal behavior from abnormal behavior and generate meaningful predictions. For example, Netuitive typically requires two weeks of data before it can forecast abnormal behavior and initiate alarm generation.

In a virtualized scenario, where applications encapsulated within respective virtual machines share a common host and all virtual machine have the capability to migrate during their lifetime onto different machines with different resources, the statistics collected from different physical machines must be re-used appropriately for conclusions to be meaningful and predictions to be accurate. For example, assume that at time t1, a virtual machine is hosted on machine 'A' and at time t2, the virtual machine migrates to machine 'B'. Further, assume that machine 'A' and machine 'B' belong to two different server classes (with different hardware architectures). If the CPU utilization by an application on machine 'A' is 50% at certain workload, the CPU utilization on machine 'B' could be 20% for the application at the same workload. In such scenarios, the existing commercial application performance management tools will fail to generate meaningful predictions. The data collected by Netuitive on machine A is irrelevant for predicting application misbehavior on machine B. Additionally, many of the commercial tools work with only a limited set of variables and, thus, do not scale well to virtualized machines.

## SUMMARY

According to one embodiment, a method includes measuring current utilization of at least one system resource by an application. The method also includes generating a forecasted utilization for the at least one system resource by the application. The method further includes calculating an error between the current utilization and forecasted utilization. The method also includes determining when the application is misbehaving based, in part, on the error.

According to another embodiment, a computer program product includes a non-transitory computer storage medium having code to measure current utilization of at least one system resource by an application. The medium also includes code to generate a forecasted utilization for the at least one system resource by the application. The medium further includes code to calculate an error between the current utilization and forecasted utilization. The medium also includes code to determine when the application is misbehaving based, in part, on the error.

According to a further embodiment, an apparatus includes a virtualized computer system. The apparatus also includes a monitoring system. The apparatus further includes a database of historical utilization data of the virtualized computer system for at least one application. The apparatus also includes a forecasting system. The apparatus further includes a fault detection system.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

## BRIEF DESCRIPTION OF THE DRAWINGS

For a more complete understanding of the disclosed system and methods, reference is now made to the following descriptions taken in conjunction with the accompanying drawings.

FIGURE 1 is a block diagram illustrating a system for detecting application misbehaviors according to one embodiment of the disclosure.

FIGURE 2 is a flow chart illustrating a method for detecting application misbehaviors according to one embodiment of the disclosure.

FIGURE 3 is a graph illustrating an error calculation between a forecast and measured processor utilization during normal operation according to one embodiment of the disclosure.

FIGURE 4 is a graph illustrating an error calculation between a forecast and measured memory utilization during normal operation according to one embodiment of the disclosure

FIGURE 5 is a table illustrating error values for processor and memory utilization during normal operation according to one embodiment of the disclosure.

FIGURE 6 is a graph illustrating an error calculation between a forecast and measured processor utilization during misbehavior according to one embodiment of the disclosure.

FIGURE 7 is a graph illustrating an error calculation between a forecast and measured memory utilization during misbehavior according to one embodiment of the disclosure.

FIGURE 8 is a table illustrating error values for processor and memory utilization during misbehavior according to one embodiment of the disclosure.

FIGURE 9 is a block diagram illustrating an information system according to one embodiment of the disclosure.

FIGURE 10 is block diagram illustrating a data management system configured to store databases, tables, and/or records according to one embodiment of the disclosure.

FIGURE 11 is a block diagram illustrating a server according to one embodiment of the disclosure.

## DETAILED DESCRIPTION

Misbehaving applications may be detected and corrective action taken by monitoring system resource usage in a virtualized computing system and comparing the monitored resource utilization to forecast utilization derived from historical utilization data for an application. When the monitored resource utilization deviates from the forecast utilization an alarm may be generated to alert a user or a fault diagnosis component to the potential fault and allow corrective procedures applied to the application. The corrective behavior may include, for example, increasing or decreasing resources of the virtualized computing system allocated to the application.

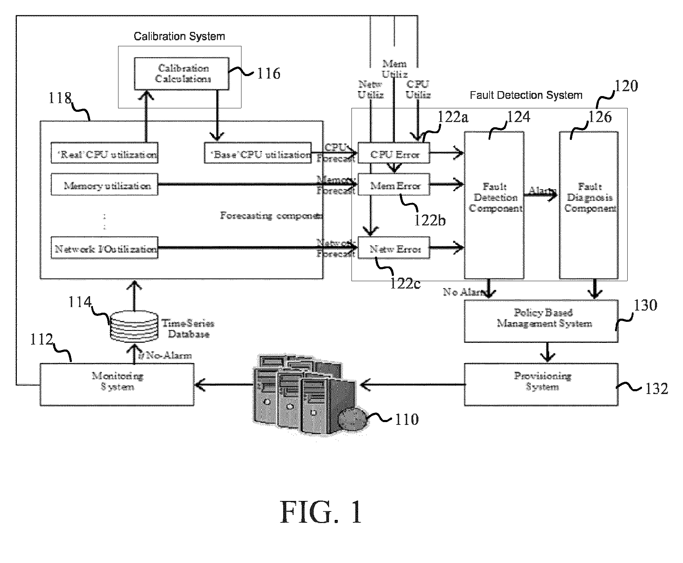

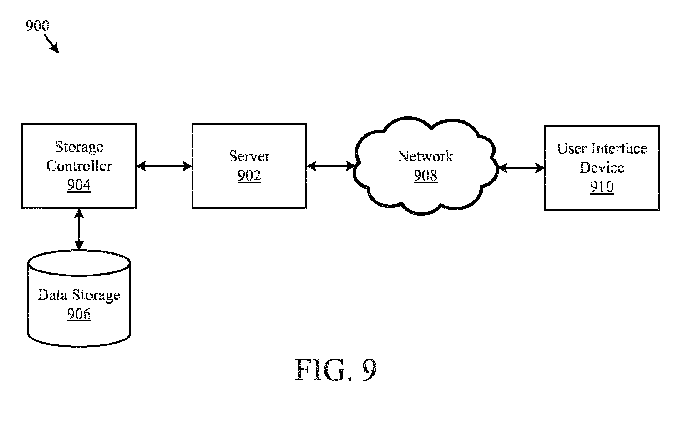

FIGURE 1 is a block diagram illustrating a system for detecting application misbehaviors according to one embodiment of the disclosure. A virtualized computing system 110, such as a cloud computing system, includes one or more computer systems. A monitoring system 112 is coupled to the virtualized computing system 110 for monitoring system resources such as processor utilization, memory utilization, network input/output (I/O), and disk I/O. The monitoring system 112 may perform monitoring at the web-tier, the application-tier, and/or the database-tier level. Historical measurement data may be stored by the monitoring system 112 in a database 114 coupled to the monitoring system 112. The database 114 may be stored in an information system as described below with respect to FIGURES 9, 10, and 11, and include time stamps with the recorded monitoring data. According to one embodiment, the database 114 only stores monitoring data for time periods during which applications are not misbehaving in the virtualized computing system 110. The monitoring system 112 is coupled to a fault detection system 120 through a number of error computation modules 122. The modules 122 receive data from the monitoring system 112 and a forecasting component 118 and calculates an error between the measured and forecasted data. For example, a processor error module 122a may compute the difference between a measured processor utilization by the monitoring system 112 and a forecasted processor utilization by the forecasting component 118. Likewise, a memory error module 122b and a network error module 122c may compute errors for memory utilization and network I/O. The fault detection system 120 may include additional error modules 122 such as a disk I/O error module (not shown).

The errors calculated by the modules 122 are reported to a fault detection component 124, which determines if an application executing on the virtualized computing system 110 is misbehaving. When an application is misbehaving an alarm may be generated by the fault detection component 124 and transmitted to a fault diagnosis component 126. Detecting misbehavior may allow correction of a misbehaving application before performance of the virtualized computing system 110 is negatively impacted. The fault diagnosis component 126 may determine a cause of the misbehaving application and transmit one or more instructions to a policy-based management system 130 for curing the misbehaving application. When no alarm is generated by the fault detection component 124 a no alarm signal may be transmitted to the policy-based management system 130. The policy-based management system 130 is coupled to a provisioning system 132, which is coupled to the virtualized computing system 110. The provisioning system 132 may perform tasks such as allocating system resources within the virtualized computing system 110 according to policy decisions received from the policy-based management system 130. For example, when the virtualized computing system 110 includes multiple computing systems each with multiple processors, the provisioning system 132 may allocate individual processors or individual computing systems to applications executing on the virtualized computing system 110. The policy-based management system 130 may provide instructions to allocate additional or fewer system resources to a misbehaving application in accordance with instructions received from the fault diagnosis component 126. According to one embodiment, when no applications are misbehaving the provisioning system 132 receives instructions from timer-based policies in the policy-based management system 130.

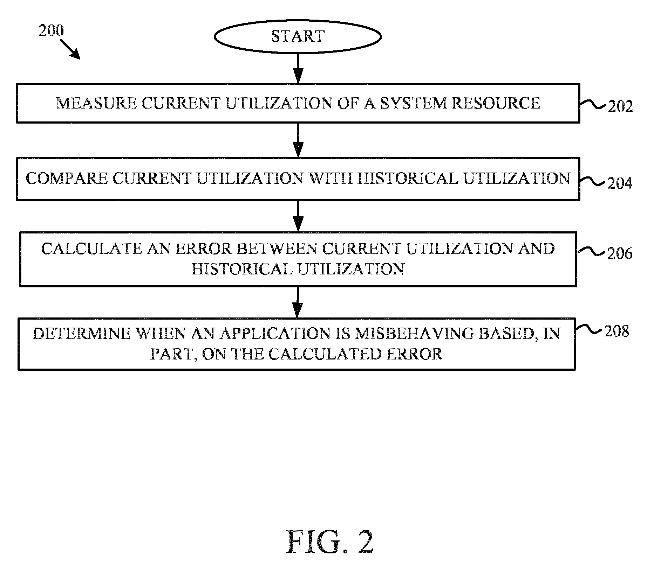

FIGURE 2 is a flow chart illustrating a method for detecting application misbehaviors according to one embodiment of the disclosure. A method 200 begins at block 202 with measuring current utilization of a system resource within the virtualized computing system 110. At block 204 the measured utilization is compared with historical utilization data stored in the database 114. At block 206 an error is calculated (by a fault detection system 120) between the current utilization and this historical utilization. The fault detection system 120 then determines at block 208 when an application is misbehaving based, in part, on the calculated error. If an application is misbehaving corrective action may be taken such as, for example, the provisioning system 132 allocating more or less system resources in the virtualized computing system 110 to the misbehaving application.

Referring back to FIGURE 1, according to one embodiment, a calibration system 116 is coupled to the forecasting component 118 for adjusting forecasts generated by the forecasting component 118 in accordance with different system capabilities and/or resources within the virtualized computing system 110. Because the virtualized computing system 110 may be a heterogeneous combination of computers with different capabilities and resources, the historical data in the database 114 may include data measured from different computing systems. The historical data may be adjusted by the calibration system 116 to a base configuration. For example, assume that an application is executing on a dual-core computing system (machine A) and that the configuration of the base machine has one core (machine B). The processing requirement of the application may first be calculated on machine B. This measurement may then be adjusted proportionately by an amount that depends on the relative strength of machine A and machine B, which generates a processor forecast for the application on machine A. According to one embodiment, the calibration system 116 may be, for example, a look-up table based on Standard Performance Evaluation Corporation (SPEC) benchmarks. According to another embodiment, the calibration system 116 may perform estimates based on support-vector machines and statistical learning theory.

According to one embodiment, the forecasting component 118 may decompose historical data in the database 114 for at least one computing resource such as memory, processor, network I/O, and disk I/O into individual components. The individual components may include trend ($T_t$), seasonal ($S_t$), cyclical ($C_t$) and error components ($E_t$). A multiplicative model may be formed for the error to decompose the data as:

$$X_t = (T_t * S_t * C_t) * E_t,$$

where $X_t$ is a data-point at period $t$, $T_t$ is the trend component at period $t$, $S_t$ is the seasonal component at period $t$, $C_t$ is the cyclical component at period $t$, and $E_t$ is the error component at period $t$. For the historical data in the database 114 regarding each of the computing resources in the virtualized computing system 110 the following steps may be performed with L as the length of the seasonality. First, calculate the $L$-period total, $L$-period moving average, and the L-period centered moving average (CMA). Second, separate the L-period CMA computed in the first step from the

**EP 2 515 233 A1**

original data to isolate the trend and the cyclical components. Third, determine seasonal factors by averaging them for each of the slots that make up the length of the seasonality. Seasonal indexes may be calculated as the average of the CMA percentage of the actual values observed in that slot. Fourth, the seasonal pattern may be removed by multiplicative seasonal adjustment, which is computed by dividing each value of the time series by the seasonal index calculated in the third step. Fifth, the de-seasonalized data of the fourth step may then be analyzed for the trend (represented as $\hat{X}_t$). Sixth, determine the cyclical component by separating the difference of actual and the trend as a fraction of the trend

$\left( \dfrac{X_t - \hat{X}_t}{\hat{X}_t} \right)$ from the results of the fifth step. Seventh, calculate the random error component after separating the trend, cyclical, and seasonal components from the actual data.

To forecast resource utilization for future time periods, a series of computations may be performed opposite to the decomposition approach described above. First, the cyclical component may be forecasted. Then, the trend component may be forecasted. Finally, the seasonal component may be forecasted. Forecasts of the individual components may be aggregated using the multiplicative model to compute the final forecast.

The forecasted values generated by the forecasting component 118 may be compared against the measured values by the monitoring system 112 and a difference between the two values calculated as an error by the fault detection system 120. According to one embodiment, the fault detection component 124 embodies a fault detection method based on the *Hotelling's* multi-variate $T^2$ statistic. The fault detection component 124 may monitor the error component for forecasting abnormal application behavior. *Hotelling's* multi-variate $T^2$ statistic has been successfully applied in the past to various chemical process industries and manufacturing operations to detect and diagnose faults. $T^2$ may be calculated as:

$$T^2 = (X - \overline{X})' S^{-1} (X - \overline{X}),$$

where $X = (x_1, x_2, ....., x_p)$ denotes the vector of variate (e.g., computational resources), $\overline{X}$ denotes the mean vector and $S$ is the variance-covariance matrix. If the computed $T^2$ values for consecutive observations is greater than a threshold ($\delta$), the fault detection component 124 may determine that the monitored application is behaving in an anomalous manner and more or less system resources in the virtualized computing system 110 should be provisioned to the application.

According to one embodiment, the fault diagnosis component 126 may employ an MYT decomposition method to interpret the signals associated with the $T^2$ value. A vector $(X - \overline{X})$ may be partitioned as:

$$(X - \overline{X})' = [(X^{(p-1)} - \overline{X}^{(p-1)}), (x_p - \overline{x}_p)]',$$

where $X^{(p-1)'} = (x_1, x_2, ..., x_{p-1})$ represents the $(p-1)$ dimensional variable vector, and $\overline{X}^{(p-1)}$ represents the corresponding $(p-1)$ elements of the mean vector. A matrix $S$ may be defined as:

$$S = \begin{bmatrix} S_{X^{(p-1)} X^{(p-1)}} & S_{x_p X^{(p-1)}} \\ S'_{x_p X^{(p-1)}} & S_{x_p^2} \end{bmatrix},$$

where, $S_{x(p-1)x(p-1)}$ is the covariance matrix of the $(p-1)$, $S_{x_p^2}$ is the the variance of $x_p$, is the $S_{x_p X^{(p-1)}}$ covariance matrix between $x_p$ and $(x_1, x_2, ..., x_{p-1})$. The $T^2$ component may be partitioned into two components:

$$T^2 = T^2_{p-1} + T^2_{p.1,2,\ldots,p-1},$$

where

$$T^2_{p-1} = \frac{(x_{p-1} - \overline{x}_{p-1})^2}{s^2_{p-1}},$$

and

$$T^2_{p.1,2,\ldots,p-1} = (X^{(p-1)} - \overline{X}^{(p-1)})'S^{-1}_{X^{(p-1)}X^{(p-1)}}(X^{(p-1)} - \overline{X}^{(p-1)}),$$

$$T^2 \equiv T^2_{(x_1,x_2,\ldots,x_p)} \cdot T^2_{(x_1,x_2,\ldots,x_p)}, \ T^2_{(x_1,x_2,\ldots,x_{p-1})}, \ \ldots\ldots \ , T^2_{(x_1)}$$

are calculated according to:

$$T^2_{(x_1,x_2,\ldots,x_j)} = (X^{(j)} - \overline{X}^{(j)})'S^{-1}_{X^{(j)}X^{(j)}}(X^{(j)} - \overline{X}^{(j)}).$$

The terms of the MYT decomposition may be calculated as:

$$T^2_{p.1,2,\ldots,p-1} = T^2_{(x_1,x_2,\ldots,x_p)} - T^2_{(x_1,x_2,\ldots,x_{p-1})},$$

$$T^2_{p-1.1,2,\ldots,p-2} = T^2_{(x_1,x_2,\ldots,x_{p-1})} - T^2_{(x_1,x_2,\ldots,x_{p-2})},$$

$$T^2_{2.1} = T^2_{(x_1,x_2)} - T^2_{(x_1)},$$

and

$$T^2_{(x_1)} = \frac{(x_1 - \overline{x_1})}{s^2_1}.$$

p! partitions of $T^2$ statistic are possible in the above calculations. According to one embodiment, the calculations may be parallelized to operate on a cluster or grid infrastructure or specialized hardware such as a General Purpose Computation on Graphics Processing Units (GPGPU) machine.

According to another embodiment, the computational overhead may be reduced through the following iterative process. First, from the correlation matrix of all the variables, all variables with weak correlation may be deleted. Second, for the remaining variables compute $T^2_{x_i}$ for $i \in (1,2,...,p)$. Variables with $T^2_{x_i}$ values greater than their respective thresholds may be amongst the root-cause variables. Further analysis of the relationship that these variables share with other variables may be omitted. Third, for this reduced set of variables, all variables with weak correlation after examining the correlation matrix may be deleted. Fourth, if the number of variables that remain at the end of the third step is $m_1$, compute $T^2_{(x_i,x_j,...,x_{m_1})}$. If a signal is detected, $T^2_{(x_i,x_j)}$ may be examined for any pair of variables $(x_i,x_j)$ from the sub-vector of $m_1$ variables that remain at the end of the third step. Pairs of variables $(x_i,x_j)$ for which $T^2_{(x_i,x_j)}$ values are significant (e.g., above a threshold value) may be the causes of the anomaly. These variables may be omitted from the analysis. Fifth, if the number of variables that remain at the end of this step are $m_2$, compute $T^2_{(x_i,x_j,...,x_{m_2})}$. If a signal is detected, $T^2_{(x_i,x_j,x_k)}$ may be examined for all triplets of variables $(x_i,x_j,x_k)$ from the sub-vector of variables that remain at the end of the fourth step. Triplets of variables $(x_i,x_j,x_k)$ for which $T^2_{(x_i,x_j,x_k)}$ values are large may be amongst the causes of the anomaly. Sixth, if the number of variables that remain at the end of the fifth step are $m_3$, the computations may be repeated with higher order terms until all signals have been removed.

To locate the variables that are responsible for the signal, the individual terms of the MYT decomposition may be examined by comparing each individual term to a threshold value that depends on the term under consideration such as for example in:

$$T^2_{x_j} > UCL_{(x_j)},$$

and

$$T^2_{(x_i,x_j)} > UCL_{(x_i,x_j)}.$$

According to one embodiment, all $x_j$ having $T^2_{x_j}$ greater than $UCL_{(x_j)}$ may be isolated and considered to be root-causes for the signal. Similarly, all pairs $(x_i, x_j)$ having $T^2_{(x_i,x_j)}$ values greater than the $UCL_{(x_i,x_j)}$ may be excluded and may be candidates for root-cause.

$UCL_{(x_j)}$ may be calculated using an *F*-distribution: $\left(\dfrac{n+1}{n}\right)F_{(\alpha,1,n-1)}$, where $\alpha$ is the threshold percentile and n is the number of observations in the sample. Similarly, $UCL_{(x_i,x_j)}$ may be calculated using an *F*-distribution:

$\left(\dfrac{2(n+1)(n-1)}{n(n-2)}\right)F_{(\alpha,2,n-2)}$. In general $UCL_{(x_i,x_j,...,x_k)}$ may be calculated from $\left(\dfrac{k(n+1)(n-1)}{n(n-k)}\right)F_{(\alpha,k,n-k)}$.

Operation of systems and methods described above with respect to FIGURE 1 and FIGURE 2 may improve application performance management techniques. According to one embodiment, the systems and methods may be implemented through software such as the statistical package R and Java. For example, a Java application may be a user interface to algorithms executing in R.

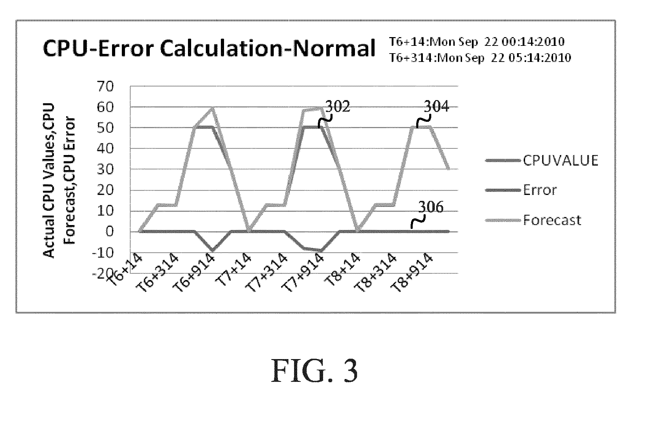

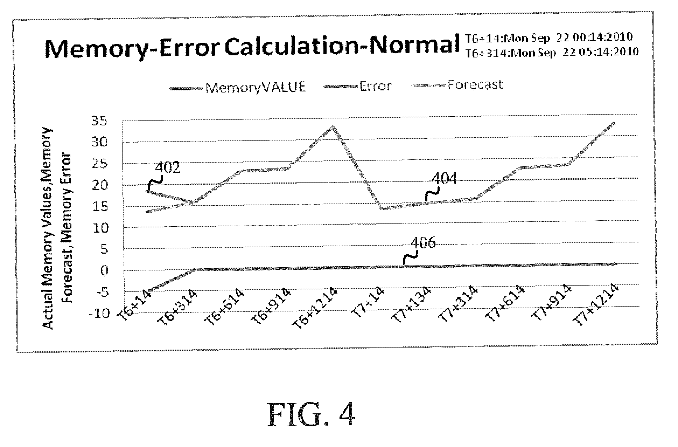

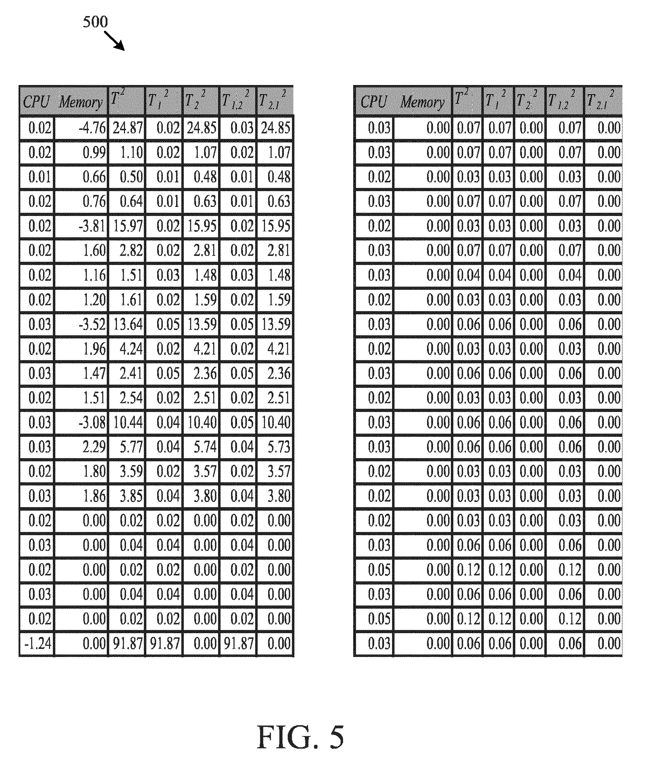

FIGURE 3 is a graph illustrating an error calculation between a forecast and measured processor utilization during normal operation according to one embodiment of the disclosure. FIGURE 3 illustrates a monitored processor utilization 302 as a function of time, a forecasted processor utilization 304 as a function of time, and a calculated error 306 as a function of time. FIGURE 4 is a graph illustrating an error calculation between a forecast and measured memory utilization during normal operation according to one embodiment of the disclosure. FIGURE 4 illustrates a monitored memory utilization 402 as a function of time, a forecasted memory utilization 404 as a function of time, and a calculated error 406 as a function of time. Small error values may be an indication of normal application behavior. The corresponding $T^2$ calculations for FIGURE 3 and FIGURE 4 are shown in a table 500 of FIGURE 5. FIGURE 5 is a table illustrating error values for processor and memory utilization during normal operation according to one embodiment of the disclosure.

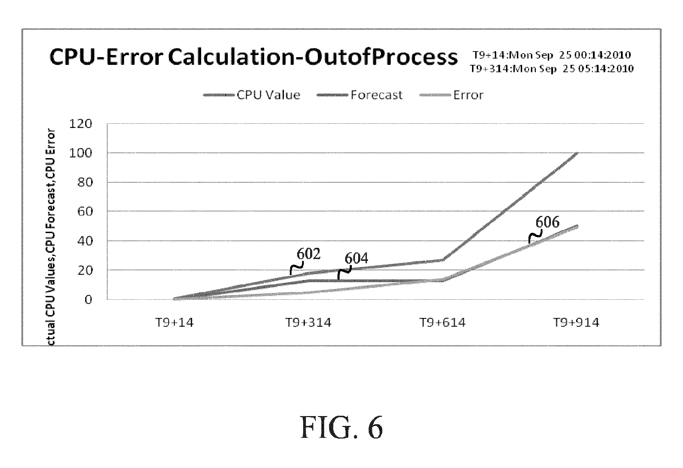

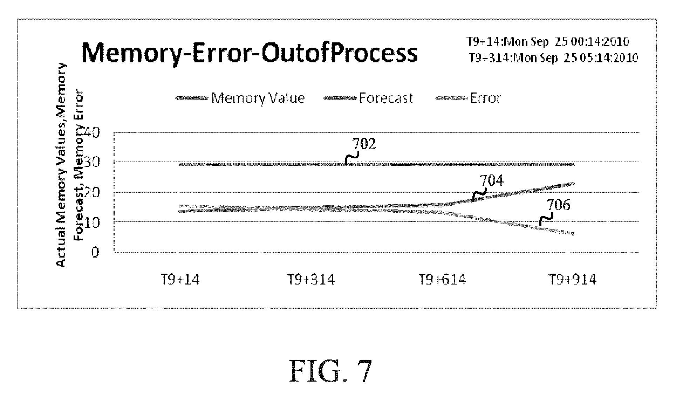

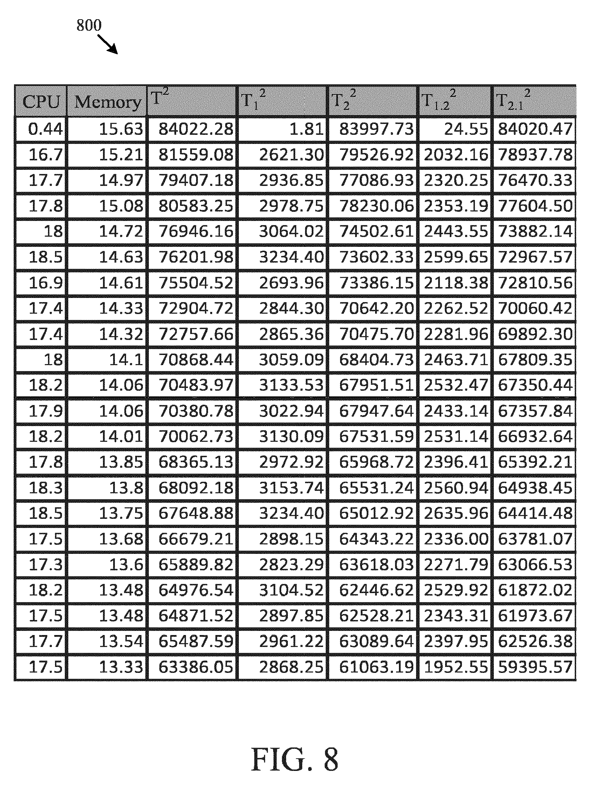

FIGURE 6 is a graph illustrating an error calculation between a forecast and measured processor utilization during misbehavior according to one embodiment of the disclosure. FIGURE 6 illustrates a monitored processor utilization 602 as a function of time, a forecasted processor utilization 604 as a function of time, and a calculated error 606 as a function of time. FIGURE 7 is a graph illustrating an error calculation between a forecast and measured memory utilization during misbehavior according to one embodiment of the disclosure. FIGURE 7 illustrates a monitored memory utilization 702 as a function of time, a forecasted memory utilization 704 as a function of time, and a calculated error 706 as a function of time. Small error values may be an indication of normal application behavior. Large error values may be an indication of application misbehavior. The corresponding $T^2$ calculations for FIGURE 6 and FIGURE 7 are shown in a table 800 of FIGURE 8. FIGURE 8 is a table illustrating error values for processor and memory utilization during misbehavior according to one embodiment of the disclosure.

The corresponding $T^2$ calculations are shown in table-2. UCL values for $T_1^2$, $T_2^2$, $T_{1.2}^2$ and $T_{2.1}^2$ are calculated for a, the threshold percentile value of 0.01. *UCL* value of $T_1^2$ is calculated as 7.48 for a sample size of 41 and F value of 7.31, and UCL value of $T_2^2$ calculated as 9.45 for a sample size of 15 and F value of 8.86. Similarly, UCL value of $T_{1.2}^2$ is calculated as 21.40 for a sample size of 10 and F value of 8.65, and *UCL* value of $T_{2.1}^2$ is calculated as 12.96 for a sample size of 20 and F value of 5.85. In the table 800 of FIGURE 8, $T_1^2$ and $T_2^2$ are both greater than their respective thresholds allowing a determination that insufficient allocation of both CPU and memory are root causes of the misbehaving application.

FIGURE 9 illustrates one embodiment of a system 900 for an information system. The system 900 may include a server 902, a data storage device 906, a network 908, and a user interface device 910. In a further embodiment, the system 900 may include a storage controller 904, or storage server configured to manage data communications between the data storage device 906 and the server 902 or other components in communication with the network 908. In an alternative embodiment, the storage controller 904 may be coupled to the network 908.

In one embodiment, the user interface device 910 is referred to broadly and is intended to encompass a suitable processor-based device such as a desktop computer, a laptop computer, a personal digital assistant (PDA) or table computer, a smartphone or other a mobile communication device or organizer device having access to the network 908. In a further embodiment, the user interface device 910 may access the Internet or other wide area or local area network to access a web application or web service hosted by the server 902 and provide a user interface for enabling a user to enter or receive information.

The network 908 may facilitate communications of data between the server 902 and the user interface device 910. The network 908 may include any type of communications network including, but not limited to, a direct PC-to-PC connection, a local area network (LAN), a wide area network (WAN), a modem-to-modem connection, the Internet, a combination of the above, or any other communications network now known or later developed within the networking arts which permits two or more computers to communicate, one with another.

In one embodiment, the user interface device 910 accesses the server 902 through an intermediate sever (not shown). For example, in a cloud application the user interface device 910 may access an application server. The application server fulfills requests from the user interface device 910 by accessing a database management system (DBMS). In this embodiment, the user interface device 910 may be a computer executing a Java application making requests to a JBOSS server executing on a Linux server, which fulfills the requests by accessing a relational database management system (RDMS) on a mainframe server.

In one embodiment, the server 902 is configured to store time-stamped system resource utilization information from a monitoring system 112 of FIGURE 1. Scripts on the server 902 may access data stored in the data storage device 906 via a Storage Area Network (SAN) connection, a LAN, a data bus, or the like. The data storage device 906 may include a hard disk, including hard disks arranged in an Redundant Array of Independent Disks (RAID) array, a tape storage drive comprising a physical or virtual magnetic tape data storage device, an optical storage device, or the like. The data may be arranged in a database and accessible through Structured Query Language (SQL) queries, or other data base query languages or operations.

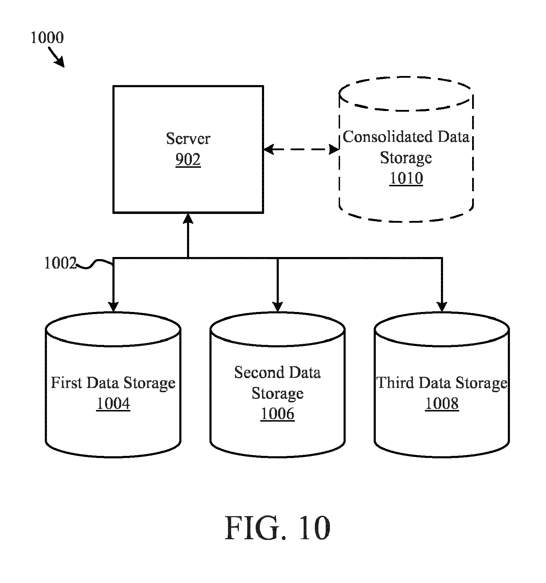

FIGURE 10 illustrates one embodiment of a data management system 1000 configured to manage databases. In one embodiment, the data management system 1000 may include the server 902. The server 902 may be coupled to a data-bus 1002. In one embodiment, the data management system 1000 may also include a first data storage device 1004, a second data storage device 1006, and/or a third data storage device 1008. In further embodiments, the data management system 1000 may include additional data storage devices (not shown). In such an embodiment, each data storage device 1004, 1006, and 1008 may each host a separate database that may, in conjunction with the other databases, contain redundant data. Alternatively, a database may be spread across storage devices 1004, 1006, and 1008 using database partitioning or some other mechanism. Alternatively, the storage devices 1004, 1006, and 1008 may be arranged in a RAID configuration for storing a database or databases through may contain redundant data. Data may be stored in the storage devices 1004, 1006, 1008, and 1010 in a database management system (DBMS), a relational database management system (RDMS), an Indexed Sequential Access Method (ISAM) database, a Multi Sequential Access Method (MSAM) database, a Conference on Data Systems Languages (CODASYL) database, or other database system.

In one embodiment, the server 902 may submit a query to selected data from the storage devices 1004, 1006. The server 902 may store consolidated data sets in a consolidated data storage device 1010. In such an embodiment, the server 902 may refer back to the consolidated data storage device 1010 to obtain a set of records. Alternatively, the server 902 may query each of the data storage devices 1004, 1006, and 1008 independently or in a distributed query to obtain the set of data elements. In another alternative embodiment, multiple databases may be stored on a single consolidated data storage device 1010.

In various embodiments, the server 1002 may communicate with the data storage devices 1004, 1006, and 1008 over the data-bus 1002. The data-bus 1002 may comprise a SAN, a LAN, or the like. The communication infrastructure may include Ethernet, Fibre-Chanel Arbitrated Loop (FC-AL), Fibre-Channel over Ethernet (FCoE), Small Computer System Interface (SCSI), Internet Small Computer System Interface (iSCSI), Serial Advanced Technology Attachment (SATA), Advanced Technology Attachment (ATA), Cloud Attached Storage, and/or other similar data communication schemes associated with data storage and communication. For example, the server 902 may communicate indirectly with the data storage devices 1004, 1006, 1008, and 1010 through a storage server or the storage controller 904.

The server 902 may include modules for interfacing with the data storage devices 1004, 1006, 1008, and 1010, interfacing a network 908, interfacing with a user through the user interface device 910, and the like. In a further embodiment, the server 902 may host an engine, application plug-in, or application programming interface (API).

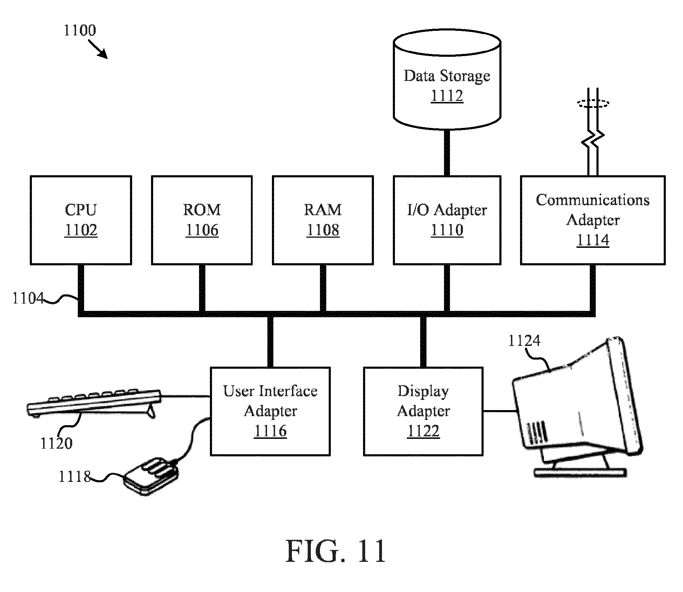

FIGURE 11 illustrates a computer system 1100 adapted according to certain embodiments of the server 902 and/or the user interface device 910 of FIGURE 4. The central processing unit ("CPU") 1102 is coupled to the system bus 1104. The CPU 1102 may be a general purpose CPU or microprocessor, graphics processing unit ("GPU"), microcontroller, or the like. The present embodiments are not restricted by the architecture of the CPU 1102 so long as the CPU 1102, whether directly or indirectly, supports the modules and operations as described herein. The CPU 1102 may execute the various logical instructions according to the present embodiments.

The computer system 1100 also may include random access memory (RAM) 1108, which may be SRAM, DRAM, SDRAM, or the like. The computer system 1100 may utilize RAM 1108 to store the various data structures used by a software application such as databases, tables, and/or records. The computer system 1100 may also include read only memory (ROM) 1106 which may be PROM, EPROM, EEPROM, optical storage, or the like. The ROM may store configuration information for booting the computer system 1100. The RAM 1108 and the ROM 1106 hold user and system data.

The computer system 1100 may also include an input/output (I/O) adapter 1110, a communications adapter 1114, a user interface adapter 1116, and a display adapter 1122. The I/O adapter 1110 and/or the user interface adapter 1116 may, in certain embodiments, enable a user to interact with the computer system 1100. In a further embodiment, the display adapter 1122 may display a graphical user interface associated with a software or web-based application.

The I/O adapter 1110 may connect one or more storage devices 1112, such as one or more of a hard drive, a compact disk (CD) drive, a floppy disk drive, and a tape drive, to the computer system 1100. The communications adapter 1114 may be adapted to couple the computer system 1100 to a network, which may be one or more of a LAN, WAN, and/or the Internet. The communications adapter 1114 may be adapted to couple the computer system 1100 to a storage device 1112. The user interface adapter 1116 couples user input devices, such as a keyboard 1120 and a pointing device 1118, to the computer system 1100. The display adapter 1122 may be driven by the CPU 1102 to control the display on the display device 1124.

The applications of the present disclosure are not limited to the architecture of computer system 1100. Rather the computer system 1100 is provided as an example of one type of computing device that may be adapted to perform the functions of a server 902 and/or the user interface device 1110. For example, any suitable processor-based device may be utilized including, without limitation, personal data assistants (PDAs), tablet computers, smartphones, computer game consoles, and multi-processor servers. Moreover, the systems and methods of the present disclosure may be implemented on application specific integrated circuits (ASIC), very large scale integrated (VLSI) circuits, or other circuitry. In fact, persons of ordinary skill in the art may utilize any number of suitable structures capable of executing logical operations according to the described embodiments. A virtualized computing system, such as that illustrated in FIGURE 1, may include one or more of the computer systems 1100 or other processor-based devices such as PDAs, table computers, smartphones, computer game consoles, and multi-processor servers.

Although the present disclosure and its advantages have been described in detail, it should be understood that various changes, substitutions and alterations can be made herein without departing from the spirit and scope of the disclosure as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the present invention, disclosure, machines, manufacture, compositions of matter, means, methods, or steps, presently existing or later to be developed that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

**Claims**

1. A method, comprising:

   measuring current utilization of at least one system resource by an application;
   generating a forecasted utilization for the at least one system resource by the application;
   calculating an error between the current utilization and forecasted utilization; and
   determining when the application is misbehaving based, in part, on the error.

2. The method of claim 1, in which the step of calculating the error comprises:

   identifying a plurality of variables for statistical analysis;
   calculating a correlation matrix for the variables; and
   deleting at least one variable having a weak correlation in the correlation matrix.

3. The method of claim 2, in which the step of calculating the error further comprises:

   computing a $T^2$ value for plurality of variables remaining after deleting the at least one variable having a weak correlation; and
   deleting at least one variable from the plurality of variables having a $T^2$ value greater than a threshold.

4. The method of claim 3, in which the step of calculating the error further comprises:

   calculating a $T^2$ value for pairs of variables of the plurality of variables remaining after deleting the at least one variable having a $T^2$ value greater than the threshold; and

deleting at least one pair of variables from the plurality of variables having a $T^2$ value greater than a threshold.

5. The method of any preceding claim, in which the at least one system resource is at least one of a processor, memory, network input/output (I/O), and disk I/O.

6. The method of any preceding claim, in which the current utilization is measured by executing the application on a first system of a virtualized computing system and the historical utilization is based on executing the application on a second system of the virtualized computing system different from the first system, and further comprising adjusting the forecast utilization based on differences between a first system and a second system.

7. The method of any preceding claim, further comprising, when the application is misbehaving, allocating different system resources to the application.

8. A computer program product, comprising:

a non-transitory computer storage medium comprising:

code to measure current utilization of at least one system resource by an application;
code to generate a forecasted utilization for the at least one system resource by the application;
code to calculate an error between the current utilization and forecasted utilization; and
code to determine when the application is misbehaving based, in part, on the error.

9. The computer program product of claim 8, in which the at least one system resource is at least one of a processor, memory, network input/output (I/O), and disk I/O.

10. The computer program product of claim 8 or 9, in which the code to generate the forecasted utilization comprises code to generate a forecasted utilization based, in part, on historical utilization.

11. The computer program product of claim 10, in which the current utilization is measured by executing the application on a first system of a virtualized computing system and the historical utilization is based on executing the application on a second system of the virtualized computing system different from the first system.

12. The computer program product of claim 11, in which the medium further comprises code to adjust the forecast utilization based on differences between the first system and the second system.

13. The computer program product of claim 11 or 12, in which the second system is a base system.

14. The computer program product of claim 11, 12 or 13, in which the medium further comprises code to, when the application is misbehaving, allocate different system resources to the application.

15. An apparatus, comprising:

a virtualized computer system;
a monitoring system;
a database of historical utilization data of the virtualized computer system for at least one application;
a forecasting system; and
a fault detection system.

16. The apparatus of claim 15, in which the virtualized computer system includes at least one computer resource coupled to the monitoring system.

17. The apparatus of claim 15 or 16, further comprising a calibration system coupled to the forecasting system.

18. The apparatus of any one of claims 15 to 17, further comprising a provisioning system coupled to the fault detection system and the virtualized computer system.

19. The apparatus of claim 18, further comprising a policy-based management system coupled to the provisioning system and the fault detection system.

**20.** The apparatus of any one of claims 15 to 19, in which the virtualized computer system is a cloud computing system.

FIG. 1

200

START

MEASURE CURRENT UTILIZATION OF A SYSTEM RESOURCE — 202

COMPARE CURRENT UTILIZATION WITH HISTORICAL UTILIZATION — 204

CALCULATE AN ERROR BETWEEN CURRENT UTILIZATION AND HISTORICAL UTILIZATION — 206

DETERMINE WHEN AN APPLICATION IS MISBEHAVING BASED, IN PART, ON THE CALCULATED ERROR — 208

FIG. 2

FIG. 3

FIG. 4

500

| CPU | Memory | $T^2$ | $T_1^2$ | $T_2^2$ | $T_{1.2}^2$ | $T_{2.1}^2$ |
|---|---|---|---|---|---|---|
| 0.02 | -4.76 | 24.87 | 0.02 | 24.85 | 0.03 | 24.85 |
| 0.02 | 0.99 | 1.10 | 0.02 | 1.07 | 0.02 | 1.07 |
| 0.01 | 0.66 | 0.50 | 0.01 | 0.48 | 0.01 | 0.48 |
| 0.02 | 0.76 | 0.64 | 0.01 | 0.63 | 0.01 | 0.63 |
| 0.02 | -3.81 | 15.97 | 0.02 | 15.95 | 0.02 | 15.95 |
| 0.02 | 1.60 | 2.82 | 0.02 | 2.81 | 0.02 | 2.81 |
| 0.02 | 1.16 | 1.51 | 0.03 | 1.48 | 0.03 | 1.48 |
| 0.02 | 1.20 | 1.61 | 0.02 | 1.59 | 0.02 | 1.59 |
| 0.03 | -3.52 | 13.64 | 0.05 | 13.59 | 0.05 | 13.59 |
| 0.02 | 1.96 | 4.24 | 0.02 | 4.21 | 0.02 | 4.21 |
| 0.03 | 1.47 | 2.41 | 0.05 | 2.36 | 0.05 | 2.36 |
| 0.02 | 1.51 | 2.54 | 0.02 | 2.51 | 0.02 | 2.51 |
| 0.03 | -3.08 | 10.44 | 0.04 | 10.40 | 0.05 | 10.40 |
| 0.03 | 2.29 | 5.77 | 0.04 | 5.74 | 0.04 | 5.73 |
| 0.02 | 1.80 | 3.59 | 0.02 | 3.57 | 0.02 | 3.57 |
| 0.03 | 1.86 | 3.85 | 0.04 | 3.80 | 0.04 | 3.80 |
| 0.02 | 0.00 | 0.02 | 0.02 | 0.00 | 0.02 | 0.00 |
| 0.03 | 0.00 | 0.04 | 0.04 | 0.00 | 0.04 | 0.00 |
| 0.02 | 0.00 | 0.02 | 0.02 | 0.00 | 0.02 | 0.00 |
| 0.03 | 0.00 | 0.04 | 0.04 | 0.00 | 0.04 | 0.00 |
| 0.02 | 0.00 | 0.02 | 0.02 | 0.00 | 0.02 | 0.00 |
| -1.24 | 0.00 | 91.87 | 91.87 | 0.00 | 91.87 | 0.00 |

| CPU | Memory | $T^2$ | $T_1^2$ | $T_2^2$ | $T_{1.2}^2$ | $T_{2.1}^2$ |
|---|---|---|---|---|---|---|
| 0.03 | 0.00 | 0.07 | 0.07 | 0.00 | 0.07 | 0.00 |
| 0.03 | 0.00 | 0.07 | 0.07 | 0.00 | 0.07 | 0.00 |
| 0.02 | 0.00 | 0.03 | 0.03 | 0.00 | 0.03 | 0.00 |
| 0.03 | 0.00 | 0.07 | 0.07 | 0.00 | 0.07 | 0.00 |
| 0.02 | 0.00 | 0.03 | 0.03 | 0.00 | 0.03 | 0.00 |
| 0.03 | 0.00 | 0.07 | 0.07 | 0.00 | 0.07 | 0.00 |
| 0.03 | 0.00 | 0.04 | 0.04 | 0.00 | 0.04 | 0.00 |
| 0.02 | 0.00 | 0.03 | 0.03 | 0.00 | 0.03 | 0.00 |
| 0.03 | 0.00 | 0.06 | 0.06 | 0.00 | 0.06 | 0.00 |
| 0.02 | 0.00 | 0.03 | 0.03 | 0.00 | 0.03 | 0.00 |
| 0.03 | 0.00 | 0.06 | 0.06 | 0.00 | 0.06 | 0.00 |
| 0.02 | 0.00 | 0.03 | 0.03 | 0.00 | 0.03 | 0.00 |
| 0.03 | 0.00 | 0.06 | 0.06 | 0.00 | 0.06 | 0.00 |
| 0.03 | 0.00 | 0.06 | 0.06 | 0.00 | 0.06 | 0.00 |
| 0.02 | 0.00 | 0.03 | 0.03 | 0.00 | 0.03 | 0.00 |
| 0.02 | 0.00 | 0.03 | 0.03 | 0.00 | 0.03 | 0.00 |
| 0.02 | 0.00 | 0.03 | 0.03 | 0.00 | 0.03 | 0.00 |
| 0.03 | 0.00 | 0.06 | 0.06 | 0.00 | 0.06 | 0.00 |
| 0.05 | 0.00 | 0.12 | 0.12 | 0.00 | 0.12 | 0.00 |
| 0.03 | 0.00 | 0.06 | 0.06 | 0.00 | 0.06 | 0.00 |
| 0.05 | 0.00 | 0.12 | 0.12 | 0.00 | 0.12 | 0.00 |
| 0.03 | 0.00 | 0.06 | 0.06 | 0.00 | 0.06 | 0.00 |

FIG. 5

FIG. 6

FIG. 7

800

| CPU | Memory | $T^2$ | $T_1^2$ | $T_2^2$ | $T_{1.2}^2$ | $T_{2.1}^2$ |
|---|---|---|---|---|---|---|
| 0.44 | 15.63 | 84022.28 | 1.81 | 83997.73 | 24.55 | 84020.47 |
| 16.7 | 15.21 | 81559.08 | 2621.30 | 79526.92 | 2032.16 | 78937.78 |
| 17.7 | 14.97 | 79407.18 | 2936.85 | 77086.93 | 2320.25 | 76470.33 |
| 17.8 | 15.08 | 80583.25 | 2978.75 | 78230.06 | 2353.19 | 77604.50 |
| 18 | 14.72 | 76946.16 | 3064.02 | 74502.61 | 2443.55 | 73882.14 |
| 18.5 | 14.63 | 76201.98 | 3234.40 | 73602.33 | 2599.65 | 72967.57 |
| 16.9 | 14.61 | 75504.52 | 2693.96 | 73386.15 | 2118.38 | 72810.56 |
| 17.4 | 14.33 | 72904.72 | 2844.30 | 70642.20 | 2262.52 | 70060.42 |
| 17.4 | 14.32 | 72757.66 | 2865.36 | 70475.70 | 2281.96 | 69892.30 |
| 18 | 14.1 | 70868.44 | 3059.09 | 68404.73 | 2463.71 | 67809.35 |
| 18.2 | 14.06 | 70483.97 | 3133.53 | 67951.51 | 2532.47 | 67350.44 |
| 17.9 | 14.06 | 70380.78 | 3022.94 | 67947.64 | 2433.14 | 67357.84 |
| 18.2 | 14.01 | 70062.73 | 3130.09 | 67531.59 | 2531.14 | 66932.64 |
| 17.8 | 13.85 | 68365.13 | 2972.92 | 65968.72 | 2396.41 | 65392.21 |
| 18.3 | 13.8 | 68092.18 | 3153.74 | 65531.24 | 2560.94 | 64938.45 |
| 18.5 | 13.75 | 67648.88 | 3234.40 | 65012.92 | 2635.96 | 64414.48 |
| 17.5 | 13.68 | 66679.21 | 2898.15 | 64343.22 | 2336.00 | 63781.07 |
| 17.3 | 13.6 | 65889.82 | 2823.29 | 63618.03 | 2271.79 | 63066.53 |
| 18.2 | 13.48 | 64976.54 | 3104.52 | 62446.62 | 2529.92 | 61872.02 |
| 17.5 | 13.48 | 64871.52 | 2897.85 | 62528.21 | 2343.31 | 61973.67 |
| 17.7 | 13.54 | 65487.59 | 2961.22 | 63089.64 | 2397.95 | 62526.38 |
| 17.5 | 13.33 | 63386.05 | 2868.25 | 61063.19 | 1952.55 | 59395.57 |

FIG. 8

900

Storage
Controller
904

Server
902

Network
908

User Interface
Device
910

Data Storage
906

FIG. 9

**FIG. 10**

1100

| | | | | | |
|---|---|---|---|---|---|

Data Storage
1112

CPU
1102

ROM
1106

RAM
1108

I/O Adapter
1110

Communications
Adapter
1114

1104

User Interface
Adapter
1116

Display
Adapter
1122

1124

1120

1118

FIG. 11

EP 2 515 233 A1

Europäisches Patentamt
European Patent Office
Office européen des brevets

**EUROPEAN SEARCH REPORT**

Application Number

EP 12 16 3822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/199196 A1 (PERACHA ZAHUR [US]) 6 August 2009 (2009-08-06) | 1-5, 8-10,15, 16,18-20 | INV. G06F11/07 |
| Y | * abstract * * paragraphs [0002], [0030], [0035], [0036], [0062], [0074], [0075], [0119], [0120], [0134], [0138] * * figures 1a,2b,3,18 * | 6,11-14, 17 | |
| X | US 2008/126413 A1 (ADDLEMAN MARK JACOB [US] ET AL) 29 May 2008 (2008-05-29) | 1-5, 7-10, 12-20 | |
| A | * abstract * * paragraphs [0034], [0037], [0038], [0060] * * figures 1a,3 * | 6,11 | |
| Y | US 2010/083248 A1 (WOOD TIMOTHY W [US] ET AL) 1 April 2010 (2010-04-01) * abstract * * paragraphs [0008], [0023], [2426], [0028], [0049] * * figures 1a,1b,4 * | 6,11-14, 17 | TECHNICAL FIELDS SEARCHED (IPC) G06F H04L |

The present search report has been drawn up for all claims

| Place of search | Date of completion of the search | Examiner |
|---|---|---|
| The Hague | 18 June 2012 | Sabbah, Yaniv |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

## ANNEX TO THE EUROPEAN SEARCH REPORT
## ON EUROPEAN PATENT APPLICATION NO.

EP 12 16 3822

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2012

| Patent document cited in search report | | Publication date | Patent family member(s) | Publication date |
|---|---|---|---|---|
| US 2009199196 | A1 | 06-08-2009 | NONE | |
| US 2008126413 | A1 | 29-05-2008 | NONE | |
| US 2010083248 | A1 | 01-04-2010 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61476348 A, Venkat